(19) **Europäisches Patentamt / European Patent Office / Office européen des brevets**

(11) **EP 1 807 351 B1**

(12) **EUROPEAN PATENT SPECIFICATION**

(45) Date of publication and mention of the grant of the patent:
**11.10.2017 Bulletin 2017/41**

(21) Application number: **05775413.7**

(22) Date of filing: **22.08.2005**

(51) Int Cl.:
*C01F 11/38* (2006.01)     *C01F 11/44* (2006.01)
*C05C 5/04* (2006.01)

(86) International application number:
**PCT/PL2005/000054**

(87) International publication number:
**WO 2006/031139 (23.03.2006 Gazette 2006/12)**

(54) **METHOD OF CALCIUM NITRATE PRODUCTION**

VERFAHREN ZUR HERSTELLUNG VON CALCIUMNITRAT

PROCEDE DE PRODUCTION DE NITRATE DE CALCIUM

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.09.2004 PL 37013104**

(43) Date of publication of application:
**18.07.2007 Bulletin 2007/29**

(73) Proprietors:
• **Nawrocki, Adam**
  **61-306 Poznan (PL)**
• **Olszewski, Radoslaw**
  **61-038 Poznan (PL)**

(72) Inventors:
• **Nawrocki, Adam**
  **61-306 Poznan (PL)**
• **Olszewski, Radoslaw**
  **61-038 Poznan (PL)**

(74) Representative: **Sitkowska, Jadwiga et al**
**Kancelaria Patentowa**
**Al. Komisji Edukacji Narodowej 83/106**
**02-777 Warszawa (PL)**

(56) References cited:
**EP-A- 0 063 688**     **WO-A-02/02482**
**WO-A-97/45382**     **CH-A- 174 641**
**DE-B- 1 098 527**     **FR-A- 861 676**
**GB-A- 500 830**     **US-A- 4 569 677**
**US-A- 5 326 541**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The subject of the invention is a method of calcium nitrate production. Calcium nitrate is used in agriculture, greenhouse cultivation, water and sewage processing and in concrete additives industry. The high quality of calcium nitrate, with very low content of insoluble substances, no anti-caking agents combined with low hygroscopicity is especially needed in greenhouse and hydroponic cultivations. Additionally, the finished product should be characterized by a low content of ferrous compounds, phosphates and heavy metals.

A patent description RP no. 172651 presents a method of liquid physiologically alkaline multi-component fertilizers production, in which ground calcium and magnesium raw materials are blown as a suspension with air into a reactor with circulating solutions of calcium nitrate and magnesium nitrate, containing 380 - 450 g of nitrates / $dcm^3$, while reagents are simultaneously sprayed with calcium and magnesium nitrates, to which nitric acid has been added beforehand. In this way a decomposition of calcium and magnesium raw materials is achieved at the temperature of 30-60°C. Then gaseous ammonia and aqueous solution of acrylamide polymer are simultaneously fed into the reactor. In order to obtain a liquid physiologically alkaline fertilizer, at the final stage of the known process, such quantity of sodium nitrate solution is added that the following weight ratio of components is achieved: 2. 3.0 of calcium, 0.8-1.1 magnesium and 3.6 - 4.0 of sodium.

In the known processes of calcium nitrate fertilizer grade production, the form of the product obtained from calcium nitrate solution in a process of e.g. phosphorite reaction with nitric acid, is of great importance. It is important at the final production stages that calcium nitrate crystals have a stable form and don't contain impurities such as ferrous and fluorous compounds, which are insoluble in water and difficult to separate by the traditional methods of neutralization and purification.

A method of crystalline calcium nitrate production has been described, among others, in the patent description US 4569677. The known method is based on adding crystalline seeds to a concentrated calcium nitrate solution, which is later cooled below the crystallization temperature, so that in the final stage crystals $Ca(NO_3)_2$ are obtained, which are separated from the mother solution in separative processes. However, according to patent description no. WO 0183374 crystalline calcium nitrate is obtained through crystallization of the melt containing 5 moles of $Ca(NO_3)_2$ and 1 mol of $NH_4NO_3$, while the process is carried out in a fluidized granulator, cooled with air at the temperature of 30-40°C, and relative air humidity below 30%.

Crystalline calcium nitrate has a low melting point (45-50°C), as it is a strongly hygroscopic compound, and tends to cake, which makes it difficult to store the product. To raise the melting point 6-8% of ammonium nitrate is fed into the melt, whereas the tendency of the granulate and crystals to cake is minimized by adding anti-caking agents, in either solid or liquid form. According to the patent description no. EP 0255665 in order to reduce the hygroscopy of nitrates, and of calcium nitrate in particular, 0.1-0.5% by weight of anti-caking agent is added, containing 2-10% by weight of polyethylene wax, 20-35% by weight of microcrystalline wax, and 60-80% by weight of mineral oil.

GB 500830 discloses a process for simultaneous manufacture of calcium nitrate and carbon dioxide carried out in a closed vessel under pressure. The process is carried out in a closed vessel into which limestone is introduced. Nitric acid is introduced by means of a pump and sprayed onto the limestone. Resulting calcium nitrate passes into the collecting chamber. Therefore, nitric acid in fact wash over gravitationally after it reaches the limestone and obviously dead zones may occur which are not reached by nitric acid. As it is obvious for a skilled person, especially with reference to the drawing, the pressure in the reaction system is only the pressure of carbon dioxide formed in the reaction. Carbon dioxide must be periodically removed through the outlet.

The aim of the invention was to develop a method of calcium nitrate production, which would lead to a high quality product, with a stable form, no anti-caking agents, and with a low content of phosphates, fluorides and heavy metals. It has been proved that the method of calcium nitrate production according to the invention fulfils this aim.

The method of the invention is as defined in claim 1.

The method of the invention comprises firstly the reaction in a continuous flow columns where the packing is limestone and secondly a continuous belt crystallization of the final product. In the columns exothermic reaction takes place according to the following equation:

$$CaCO_3 + 2HNO_3 \rightarrow Ca(NO_3)_2 + H_2O + CO_2\uparrow$$

Assuming that the height of the packing is stable, and only the dosing rate of nitric acid into the reactor changes in the continuous process, the increase in the efficiency of the process is closely connected with the content of unreacted nitric acid in the reaction liquid. The correlation between the quantity of free nitric acid in the product, and the flow rate of nitric acid through the packing is an exponential function, closely related to the duration of the reaction. The above mentioned correlation is described by the following equation:

$$c_w = 0{,}0578 \cdot e^{\frac{1{,}76}{\tau}} \quad \text{[weight \%]}$$

where:

$c_w$ - quantity of free nitric acid [weight %],

$$\tau = \frac{V_{sw}}{\dot{V}_s + \dot{V}_z} \approx \frac{V_{sw}}{\dot{V}_s} \text{ - duration of the reaction [h]},$$

$\dot{V}_s$ - flow rate of nitric acid [dm$^3$/h],
$\dot{V}_z$ - flow rate of the filling material [dm$^3$/h],
$V_{sw}$ - space in the packing [m$^3$],

Calcium nitrate production in a continuous process is carried out in a flow columns operating in the range of Reynolds numbers characteristic for laminar flow:

$$Re_i = \frac{2}{3} \cdot \frac{\varphi}{1-\varepsilon} \cdot \frac{w_s \cdot d_e \cdot \rho}{\eta} \in (0.5 - 10)$$

where:

$\varphi$ - shape factor
$w_s$ - nitric acid flow rate [m/s]
$d_e$ - equivalent diameter of the packing [m]
$\rho$ - density in the reactor [kg/m$^3$]
$\varepsilon$ - specific surface of the packing [m$^3$/m$^3$]
$\eta$ - viscosity [kg/ms].

Such a procedure guarantees the maximum degree of nitric acid reaction and obtaining a product, in which the quantity of free nitric acid amounts to 0.1-0.5 % by weight, preferably 0.2% by weight.

At the next stage of the process, according to the invention aluminium hydroxide and iron hydroxide, both of which are insoluble in water, undergo a process of separation, by methods according to the state of the art, using substances with high oxidation and reduction potentials. The resulting suspension, insoluble in water solutions, undergoes the process of flocculation at the temperature of 20-25°C, by adding cationic polyelectrolyte, allowing the formation of colloidal sediment, which is later separated. The purification process of calcium nitrate is carried out at pH 5-7.

The resulting calcium nitrate in liquid form may be used in agriculture, greenhouse cultivation or as a concrete additive. In order to obtain the product in the solid form, according to the invention, calcium nitrate solution is concentrated in evaporators with the addition of ammonium nitrate while securing the following weight ratio: 0.6 - 0.8 % N-NH$_4$ :26.8 - 27.2 % CaO, leading to the optimal concentration of 26.8-27.2% by weight. At the time of evaporation the crystalline seeds are coming into being *in situ* in the quantity of 20-40% to the total mother liquor, preferably, 30%, while the size of the seeds varies in the range of 0.01-0.5mm. The concentration process is carried out to secure constant temperature, and CaO concentration, thus adding either crystalline seeds obtained through mechanical grinding of the end product or anti-caking agents, which would later constitute the impurity of the end product, is not necessary.

At the final stage of the process according to the invention, calcium nitrate melt is crystallized after being cooled. Preferably, during the cooling of the crystallizing suspension boron compounds, and microelements from the group: Cu, Fe, Mn, Zn in the form of biodegradable chelates, or their mixture are added up to 2,0% by weight, which increases the range of the application of the end product.

The melt prepared in this way is pumped onto a belt crystallizer, which is cooled with water and operated continuously. Rapid crystallization and reducing the degree of development of the contact surface of calcium nitrate with air leads to a significant decrease in water absorption from the environment by the end product, in comparison with the end product obtained according to the known solutions, in which calcium nitrate in the form of 1-2 mm diameter granules is produced. The product obtained according to the invention has the form of flakes. The graph presented below shows water absorption by calcium nitrate at the temperature of 25°C, and relative air humidity of 65%, with the calcium nitrate sample containing no anti-caking agents.

The calcium nitrate produced by the method according to the invention contains: 17.0-28% by weight of CaO, 0.1-0.3% by weight of MgO depending on the form, either liquid or solid of the end product, 0 - 0.2 % by weight of microelements such as: Cu, Fe, Mn, Zn in the form of biodegradable chelates, and of boron. The product obtained according to the invention, with its bulk density of 950 kg/m<3> and solubility of 200g in 100 g of water at the temperature of 2O°C, contains no more than 0.01 % of insoluble substances.

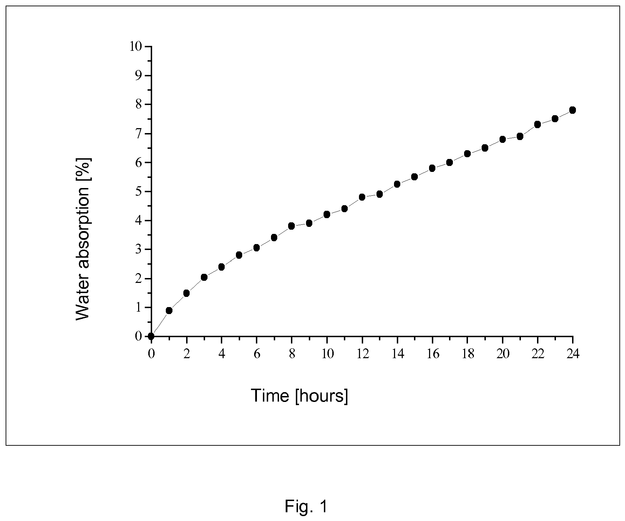

Fig. 1 presents the dependence of water absorption by calcium nitrate on time at the temperature of 25°C and relative air humidity of 65%.

In comparison with other known technologies of production the obtained product is free of such impurities as : fluoride ions, phosphor ions, and heavy metals, therefore it may have various applications also in the greenhouse and hydroponic cultivations.

## Example 1 (reference example)

292kg/h of limestone and 500 l/h of 53% by weight nitric acid have been continuously fed into the flow columns. During the continuous process of the reaction, with the flow of nitric acid secured at Reynolds number 1, 537 l/h of calcium nitrate solution have been obtained, containing 916 kg of $Ca(NO_3)_2$ in $1m^3$ of the solution. After storing $10m^3$ of calcium nitrate the remaining free nitric acid has been neutralized with the use of 50 l of calcium suspension. The oxidation and separation of ferrous and aluminium compounds, which are both insoluble in water, have been carried out at pH = 7, with 4 l of sodium hypochlorite per $1m^3$ of calcium nitrate used as the oxidizing agent. After quantitative separation of insoluble substances a flocculation of the sediment has been carried out with the use of 200 l of 0,1% cationic polyelectrolyte. The flocculating sediment has been removed, at the first stage, with the use of pressure filtration on a filtering press, and at the second stage with the use of candle filters. 166l of water per $1m^3$ of calcium nitrate has been added to a clear solution. A commercial product has been obtained with the following parameters:

CaO - 17%
MgO - 0,1%
$N-NO_3$ - 8,5%
$N-NH_4$ - 0%
pH - 6,5
d - 1,500 $g/cm^3$
Insoluble substances - 0,002%

## Example 2

537 kg/h of limestone and 900 l/h of 55% by weight nitric acid have been continuously fed into the flow columns. During the continuous process of the reaction, with the flow of nitric acid secured at Reynolds number 3, 966 l/h of calcium nitrate solution have been obtained, containing 959 kg of Ca(NO3)2 in $1m^3$ of the solution. After storing $10m^3$ of calcium nitrate the remaining free nitric acid has been neutralized with the use of 10 l of 25% by weight of ammonia water. The oxidation and separation of ferrous and aluminium compounds, which are both insoluble in water, have been carried out at pH = 7, with 4,5 l of sodium hypochlorite per 1 $m^3$ of calcium nitrate used as the oxidizing agent. After quantitative separation of insoluble substances a flocculation of the sediment has been carried out with the use of 200 l of 0,1% cationic polyelectrolyte. The flocculating sediment has been removed, at the first stage, with the use of pressure filtration on a filtering press, and at the second stage with the use of candle filters. Solid ammonium nitrate has been added to the clear solution according to the following proportion $N-NH_4$ : CaO = 0.6 : 27.0. After gaining complete homogenity the solution has been concentrated until a concentration of 27% by weight of CaO has been secured, while 20% by weight of crystalline seeds have been produced *in situ.* The melt prepared in this way has been crystallized in the form of flakes on a belt crystalizer leading to a product with the following contents:

CaO - 27%
MgO - 0,2%
$N-NO_3$ - 14,2%
$N-NH_4$ - 0,6%
Insoluble substances - 0,003%

The maximum water absorption by the obtained product amounts to 7% with the relative air humidity up to 60% at the temperature of 25°C, with the graph presenting the water absorption by the product obtained according to the invention shown in figure no. 1.

### Example 3

710 kg/h of limestone and 1200 l/h of 55% by weight nitric acid have been continuously fed into the flow columns. During the continuous process of the reaction with the flow of nitric acid secured at Reynolds number 6, 1290 l/h of calcium nitrate solution have been obtained, containing 1150 kg of $Ca(NO_3)_2$ in 1m$^3$ of the reaction mixture. After storing 12m$^3$ of calcium nitrate the remaining free nitric acid has been neutralized with the use of 18 l of 25% by weight of ammonia water. The oxidation and separation of ferrous and aluminium compounds, which are both insoluble in water, have been carried out at pH = 6, with 4,5 l of sodium hypochlorite per 1m$^3$ of calcium nitrate used as the oxidizing agent. After quantitative separation of insoluble substances a flocculation of the sediment has been carried out with the use of 260 l of 0,1% cationic polyelectrolyte. The flocculating sediment has been removed, at the first stage, with the use of pressure filtration on a filtering press, and at the second stage with the use of candle filters. Solid ammonium nitrate has been added to the clear solurtion according to the following proportion N-NH$_4$ : CaO = 0,8 : 26,8. After gaining complete homogenity the solution has been concentrated until the concentration of 27% by weight of CaO has been secured, while 16% by weight of crystalline seeds have been produced *in situ.* 35 kg of $Na_2B_4O_7 \times 10H_2O$ and 215 kg of chelated biodegradable microelements containing the following elements: Cu, Fe, Mn, Zn have been added. The melt prepared in this way has been crystallized in the form of flakes on a belt crystalizer, leading to a product with the following contents:

CaO - 26,8%
MgO - 0,2%
N-NO$_3$ - 14,6%
N-NH$_4$ - 0,8%
B - 0,03%
Cu - 0,02%
Fe - 0,06%
Mn - 0,05%
Zn - 0,03%
Insoluble substances - 0,003%

The maximum water absorption by the obtained product amounts to 7% with the relative air humidity up to 60% at the temperature of 25°C

### Claims

1. The method of calcium nitrate production in the solid form of flakes by treating limestone with nitric acid, and evaporation of the calcium nitrate solution, followed by cooling and crystallization of the product at the solid stage, **characterized in that** the method includes the steps of:

   - the reaction between nitric acid and the limestone carried out in a continuous process in flow columns with a packing where the packing is limestone at a rate of nitric acid flow in the range of Reynolds number 0.5-10; to form a calcium nitrate solution; and then
   - the concentration of the calcium nitrate solution by evaporation in evaporators with the addition of ammonium nitrate at the weight ratio of 0.6 - 0.8% N-NH$_4$ : 26.8 - 27.2% CaO carried out until crystalline seeds are produced to obtain crystallization suspension; followed by
   - cooling the obtained crystallization suspension and crystallization on a continuously operated belt crystallizer, to obtain the end product in the solid form of flakes.

2. The method of production according to claim 1, **characterized in that** the concentration of the calcium nitrate solution is carried out until crystalline seeds in the amount of 20-40% by weight are produced in situ and CaO concentration is 26.8 - 27.2% by weight.

3. The method of production according to claim 2, **characterized in that** the concentration is carried out until crystalline seeds in the amount of 30% by weight are produced in situ.

4. The method of production according to claims 1 to 3, **characterized in that** the cooling process is carried out with the addition of boron compounds and microelements selected from the group consisting of iron Fe(III), manganese Mn(II), copper Cu(II), and zinc Zn(II) in the form of biodegradable chelates or any of their mixture in the maximum amount of 2.0% by weight.

**Patentansprüche**

1. Verfahren zur Herstellung von Calciumnitrat in einer festen Form von Flocken durch Behandlung von Kalkstein mit Salpetersäure und Verdampfung der Calciumnitratlösung, gefolgt von Abkühlung und Kristallisation des Produkts in der festen Phase, **dadurch gekennzeichnet, dass** das Verfahren die folgende Schritte enthält:

   - das Reaktion zwischen Salpetersäure und Kalkstein ausgeführt als kontinuierlicher Prozess in gepackten Durchflusskolonnen, wobei das Kolonnenpackung Kalkstein ist, mit einer Geschwindigkeit von Salpetersäure im Bereich von Reynolds-Zahl von 0,5 bis 10, um Calciumnitratlösung zu erhalten; und dann
   - die Konzentrierung von Calciumnitratlösung ausgeführt durch Verdampfung in Verdampfern mit dem Zusatz von Ammoniumnitrat in einem Gewichtsverhältnis von 0,6 - 0,8% N-NH4: 26,8 - 27,2% CaO bis Impfkristalle gebildet werden, um Kristallisationssuspension zu erhalten;
   - die Abkühlung der erhaltene Kristallisationssuspension und Kristallisation am kontinuierlich operierten Bandkristallisator, um das Endprodukt in einer festen Form von Flocken zu erhalten.

2. Das Verfahren zur Herstellung nach Anspruch 1, **dadurch gekennzeichnet, dass** die Konzentrierung von Calciumnitratlösung bis zu Impfkristalle in der Menge von 20-40 Gew.-% gebildet werden in situ und CaO Konzentration 26,8 - 27,2 Gew.-% wird, ausgeführt wird.

3. Das Verfahren zur Herstellung nach Anspruch 2, **dadurch gekennzeichnet, dass** die Konzentrierung bis zu Impfkristalle in der Menge von 30 Gew.-% gebildet werden in situ, ausgeführt wird.

4. Das Verfahren zur Herstellung nach einem der Ansprüche 1 bis 3, **dadurch gekennzeichnet, dass** das Abkühlungprozess mit dem Zusatz von Boronverbindungen und Mikroelementen ausgewählt aus der gruppe bestehend aus Eisen Fe(III), Mangan Mn(II), Kupfer Cu(II), und Zink Zn(II) in einer Form von biologisch abbaubaren Chelate oder jede Mischung davon in der maximal Menge von 2,0 Gew.-%, ausgeführt wird.

**Revendications**

1. Le procédé de production de nitrate de calcium sous une forme solide de flocons, par traitement du calcaire avec l'acide nitrique et l'évaporation de la solution de nitrate de calcium, suivie d'un refroidissement et cristallisation du produit à la phase solide, **caractérisé en ce que** le procédé comprend les étapes suivantes:

   - la reaction entre l'acide nitrique et le calcaire effectuée en continu dans les colonnes à remplissage, le remplissage étant le calcaire, à une vitesse d'écoulement d'acide nitrique dans la plage de nombre de Reynolds de 0,5 à 10, pour former la solution de nitrate de calcium; et ensuite;
   - la concentration de la solution de nitrate de calcium par évaporation dans évaporateurs avec addition du nitrate d'ammonium dans un rapport en poids de 0,6
   - 0,8% $N-NH_4$ : 26,8 - 27,2% CaO, la concentration etant effectuée jusqu'à ce que les semences cristallines sont formées, pour obtenir la suspension crystalline; suivie par
   - refroidissement de la suspension crystalline obtenue et cristallisation en un cristalliseur à bande fonctionnant de façon continue pour obtenir le produit final sous une forme solide de flocons.

2. Le procédé de production selon la revendication 1, **caractérisé en ce que** la concentration de la solution de nitrate de calcium est effectuée jusqu'à ce que des semences cristallines dans la quantité de 20-40% en poids sont formées in situ et la concentration de CaO est 26,8-27,2% en poids.

3. Le procédé de production selon la revendication 2, **caractérisé en ce que** la concentration est effectuée jusqu'à ce que des semences cristallines dans la quantité de 30% en poids sont formées in situ.

4. Le procédé de production selon une quelconque de les revendications 1 à 3, **caractérisé en ce que** le procédé du refroidissement est effectué avec l'addition des composés du bore et micro-éléments selectionees dans la groupe consistant en le fer Fe(III), le manganèse Mn(II), le cuivre Cu(II), et le zinc Zn(II) sous la form du chélate biodegradable, ou tous mélange de celles-ci, dans la quantité maximale de 2,0% en poids.

Fig. 1

**EP 1 807 351 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4569677 A
- WO 0183374 A
- EP 0255665 A
- GB 500830 A